# EUROPEAN PATENT APPLICATION

(11) **EP 1 276 071 A2**
(43) Date of publication of application: **15.01.2003**
(21) Application number: 02254636.0
(22) Date of filing: 02.07.2002
(51) Int. Cl.: G06F 17/60

(54) **Billing method for use of information and user terminals managing billing of own use of information**

(30) Priority: 03.07.2001 JP 2001202237
(71) Applicant: MATSUSHITA ELECTRIC INDUSTRIAL CO., LTD., Kadoma-shi, Osaka 571-8501 (JP)
(72) Inventor: Nakaoka, Hideaki, Toyonaka-shi, Osaka 560-0085 (JP); Kusumi, Yuki, Kashiba-shi, Nara 639-0254 (JP); Ishikawa, Akira, Kashiba-shi, Nara 639-0234 (JP)
(74) Representative: Beresford, Keith Denis Lewis

(57) **Abstract**

Service charges according to the number of use of information can be realized by managing service charges for the information with a user terminal. A control part 5 judges whether or not a script for reading out user's attribution(s) exists in contents-data received by a receiving part 3. A data-distributor judges whether or not a permission for reading out user's attribution(s) is provided with reference to a permitted URI table 9c when the script exists. In the case of provided the permission for reading out the user's attribution(s), the user's attribution(s) is read out from a user's attribution table 9b and an attribution item number is recorded together with an ID for specifying a source of distribution in a history information table 9a while outputting the user's attribution(s) to a designated destination. The control part 5 sends the history data to a billing server 11 at a desired time period. The billing server 11 calculates service charge(s) for user's attribution for each tenant and send the charge(s) to a distributor's computer 13.

## Description

### CROSS REFERENCE TO RELATED APPLICATIONS

All the contents disclosed in Japanese Patent Application No. 2001-202237 (filed on July 19, 2001), including specification, claims, drawings and abstract and summary are incorporated herein by reference in its entirety.

### BACKGROUND OF THE INVENTION

### Field of the invention

This invention relates to billing for the use of user's attribution stored in user terminals.

### Description of the related art

Recently, display images are switched according to user's attribution in data telecast through BS digital broadcasting. Steps of carrying out such switching is described briefly as follows; name, address, birth date and so on of a user are stored in a user terminal as user's attribution. A script(s) (a program(s)) for reading out user's attribution is written into BML (Broadcast Markup Language) data transmitted from a broadcasting station and display images are switched in accordance with the user's attribution read out. Practical application to use such switching is, for example, weather forecast in data telecasting. In such weather forecast, image displays are automatically switched in accordance with detailed information of address of the user, which is read therein.

The use of such user's attribution in an appropriate manner improves the quality of services provided because for users, data frequently used is automatically displayed without carrying out any selection, and for a data-distributor, display images are automatically switched to an image(s) which is interested in the users.

In light of such circumstances, the inventor reaches to an idea for billing the use of such user's attribution.

I order to do that, the following problems as to billing must be solved. 1) There is a probability that false amount would be reported when billing is carried out based on the amount of distribution of data to be distributed (hereinafter referred to as contents-data) by which information on user's attribution stored in a receiving devices is referred, 2) the actual number of use for the user's attribution for automatically performing switching process can not be managed provided the report itself is done correctly because only thing the distributors can specify is the number of distribution. These problems occur because the number of receiving devices is unknown since broadcasting itself is not interactive. In addition, there would a user who does not record their user's attribution.

The problem 1) could be a problem when information is distributed from a data-distributing-server connected to the Internet as well.

### SUMMARY OF THE INVENTION

It is an object of the present invention to solve the above-mentioned problems and to provide a method of billing the use of information capable of carrying out billing according to the number of use of user's attribution and a system achieving such a method.

The billing method according to the present invention comprising the steps of: transmitting from an information distributing device data to be distributed including a command for reading out user's attribution; at a user terminal, outputting information on user's attribution being stored to a designated destination when the received data to be distributed includes the command for reading out the user's attribution information, and storing history of the output together with information for specifying a source of transmitting the data to be distributed as history of use; and at a billing server, billing for the use of information to the information transmission source specified by the information for specifying the source.

In the billing method and the system therefor according to the present invention, the user terminal outputs information on user's attribution being stored to a designated destination when data to be distributed including a command for reading out the user's attribution information is received from an information distributing device, and history of the output is stored together with information for specifying a source of transmitting the data to be distributed as history of use, and the history of use is outputted to a billing server.

In the billing method and the system therefor according to the present invention, the user terminal outputs information on user's attribution being stored to a designated destination when data to be distributed including a command for reading out the user's attribution information is received from an information distributing device, and history of the output is stored together with information for specifying a source of transmitting the data to be distributed as history of use.

In the billing server and the method therefor according to the present invention, history of use for the information on user's attribution is read out from each of user terminals and billing onto a data distributor specified by information for specifying a source of transmitting the data to be distributed is carried out, the history of use is a record of outputting the user's attribution to a designated destination according to a command for reading out user's attribution contained in data to be distributed supplied from the data distributor, and the information for specifying the transmission source is added to the history of use.

The method of receiving data to be distributed according to the present invention comprising the steps of: outputting information on user's attribution being stored to a designated destination when data to be distributed including a command for reading out the user's attribution information; and storing history of the output together with information for specifying a source of transmitting the data to be distributed as history of use.

In the present invention, the term "a receiving device" refers to a device for receiving data from the transmission device, including both devices having no display such as set-top-box and having a display such as television set. This also includes mobile phones, portable terminal, and PCs.

In the present invention, the term "a communication path" refers to not only wired communications but also includes wireless communications.

The term "acquire through a communication line(s) " includes acquiring information through communications under not only one-to-one basis, but also one-to-multiple basis.

The term "structure-descriptive-type language description data" refers to data to which location for assigning document data to be displayed, size of a character string of the document data, and information on restricting display regarding graphic data to be referred, are added. Data written in BML is described in the embodiments herein, data in HTML, XML-type data, and data defined by MHEG (Multimedia and Hypermedia information coding Expert Group) standard, for example, is included.

The term "BML" refers to a sort of contents-description language, and it is defined by STD-B24 ver1.2 in the ARIB (Association of Radio Industries and Businesses) Standard.

The term "information on user's attribution" corresponds to user's attribution in embodiments herein.

The term "recording medium recording a program(s) " in this invention refers to a recording medium recording a program(s) therein such as a ROM(s), a RAM(s), a flexible disk(s), a CD-ROM(s), a memory card(s), a hard disk(s) and the like. The recording medium also forms a concept in which a phone line(s), a data carrying path (es) and so on are included therein. Also, the recording medium forms another concept in which a recording medium such as a hard disk(s), which is connected to the CPU and information, stored therein is executed directly the CPU. The recording medium further forms a concept in which a recording medium such as a CD-ROM(s) recording a program(s) which is executed after installation therein.

The term "program(s)" in this invention refers to not only a program(s) which is directly executed by the CPU but also a program(s) being compressed, a program(s) being encrypted and so on.

The term "recording medium recording data " in this invention refers to a recording medium recording data therein such as a ROM(s), a RAM(s), a flexible disk(s), a CD-ROM(s), a memory card(s), a hard disk(s) and the like.

The term "data" as used herein refers not only data capable of being processed with a CPU, but also includes decoder data on carrier wave(s) (i.e. carrier wave(s) modulated with the data)

Other objects and features of the present invention will be more apparent to those skilled in the art on consideration of the accompanying drawings and following specification, in which are disclosed several exemplary embodiments of the present invention. It should be understood that variations, modifications and elimination of parts might be made therein as fall within the scope of the appended claims without departing from the spirit of the invention.

### BRIEF DESCRIPTION OF THE DRAWINGS

Fig. 1 is a diagram, which shows outline of the present invention;
Fig. 2 is a functional block diagram of a transmission device according to the present invention
Fig. 3 is a diagram showing example hardware of a receiver,
Fig. 4 is a user's attribution table showing data structure thereof;
Fig. 5A and Fig, 5B are diagrams showing a history information table;
Fig. 6 is a diagram showing a permitted URI table;
Fig. 7 is a functional block diagram of a billing server;
Fig. 8 is a diagram showing an URI/tenant conversion table;
Fig. 9 is a flowchart of a browsing program;
Fig. 10 is an example of script;
Fig. 11 is a flowchart of a processing program when a script for acquiring user's attributions is supplied;
Figs. 12A, 12B and 12C are examples of display to be switched by utilizing user's attributions;
Fig. 13 is a flowchart of process for transmitting history data to the billing server;
Fig. 14 is a flowchart of process for billing to information users by the billing server;
Fig. 15A and Fig. 15B is a flowchart of process for transmitting the user's attributions;
Fig. 16 is another diagram, which shows outline of the present invention;
Figs. 17A and 17B are examples of displays for setting outputs in another embodiment of the present invention;
Fig. 18 is a view showing another data structure of the permitted URI table; and
Fig. 19 is a view showing another data structure of the permitted URI table.

### DETAILED DESCRIPTION OF THE INVENTION

### 1. A first embodiment

### (1) Overall structure

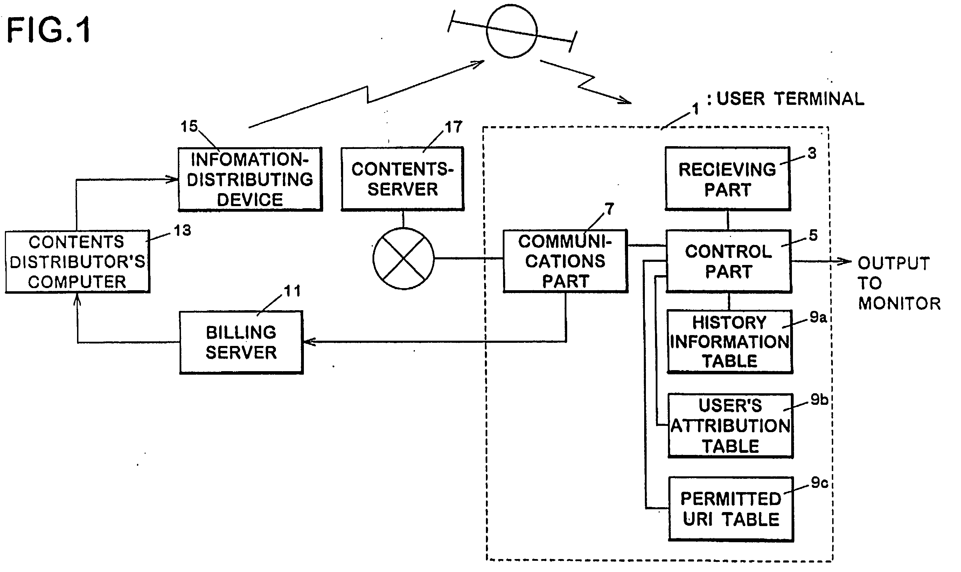

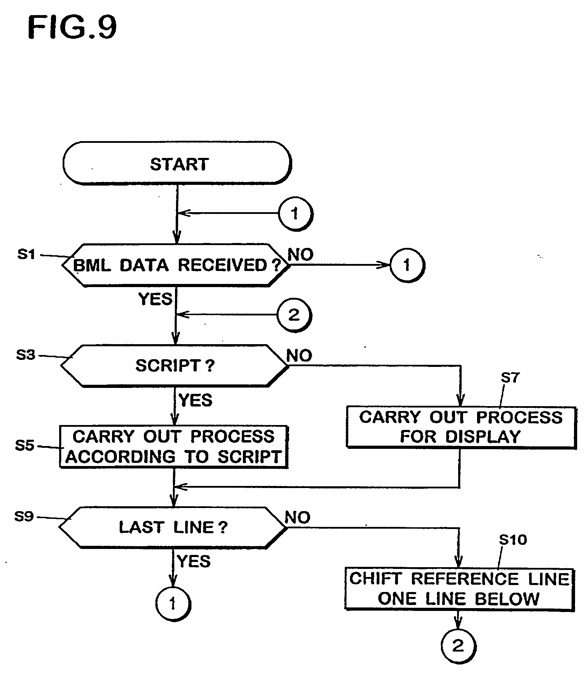

Fig. 1 shows an overall structure of a communication system using a receiving device according to an embodiment of the present. A computer 13 at a data distributor supplies contents-data to an information-distributing device 15. The distributing device 15 broadcasts the contents-data via a satellite. A user terminal 1 receives such contents-data with a receiving part 3. A control part 5 judges whether or not any scripts that read out user's attribution exist in the contents-data. When a script exists in the contents-data, the control part 5 further judges whether or not a permission to use user's attribution is provided to the distributor with reference to a table in which output of user's attribution is permitted to URI(s) depicted therein (herein referred to as permitted URI table) shown in Fig. 9c. When a permission for reading out user's attribution is provided to the distributor, the user's attribution is read out from a user's attribution table 9b and is outputted to its designated object while storing ID for specifying distributor together with items on the user's attribution into a history information table 9a. A control part 5 transmits to a billing server 11 history data stored into the history information table 9a at a predetermined period via a communication part 7. The billing server 11 stores the transmitted history data. Further, the billing server 11 calculates service charge(s) for user's attribution for each tenant, and sends the calculated charge the distributor's computer 13.

Hence, managing the service charge at user terminals can carry out billing of service charge(s) for user's attribution in accordance with the number of use of the user's attribution.

### (2) Hardware structure of information distributing device

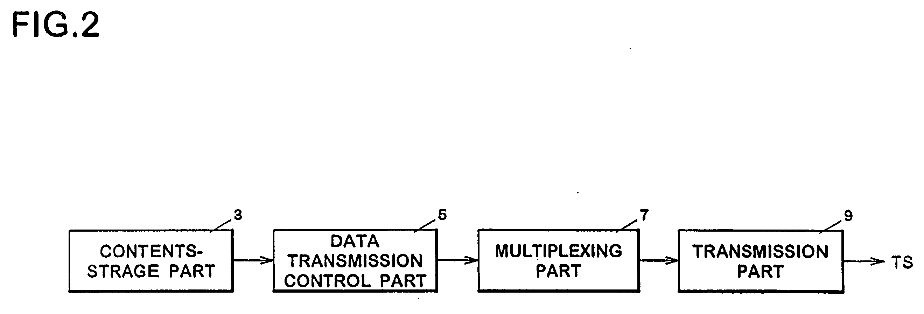

Fig. 2 shows a functional block diagram of the information-distributing device 15 (transmission device). A contents-storage part 3 stores contents. A data transmission control part 5 provides to a multiplexing part 7 new content(s) stored in the contents-storage part 3. The multiplexing part 7 packetizes the contents-data in order to generate control data DII for packetizing and provides the control data to a transmission part 9 together with data DDB. The transmission part 9 sends the data in a carousel form using a predetermined transport stream(s).

### (3) Hardware structure of receiving device

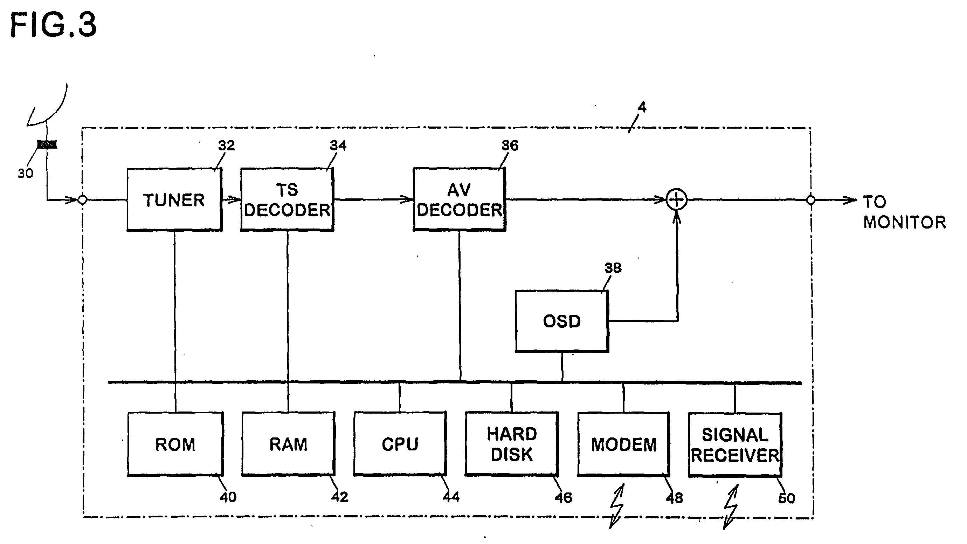

Now, hardware structure of the user terminal (receiving device) 1 will be described with Fig. 3. The structure of the user terminal is analogous to the conventional ones. The receiving device 1 comprises a tuner 32, a transport stream decoder (TS decoder) 34, an AV decoder 36, an OSD (On Screen Display) 38, a ROM 40, a RAM 42, a CPU 44, a hard disk 46, a modem 48, and a signal receiver 50 receiving a signal(s) from a remote controller. The signal receiver 50 is used for receiving a signal(s) from the remote controller.

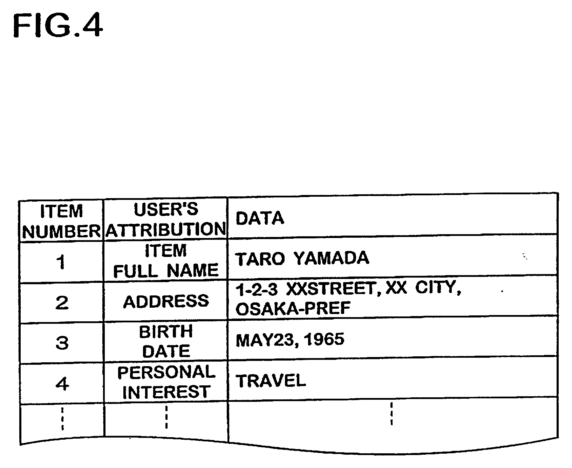

The hard disk 46 stores a browsing program, a program for acquiring information on users, and a program for transmitting history data. The details of processing performed by these programs will be described later. The hard disk 46 further stores a user's attribution table, a history information table, a table for permitted URI. In this example, items " Taro YAMADA", "1-2-3 XX street, XX City, OSAKA-Pref.", "may 23 1965", and "travel" are stored respectively in user's attribution items "full name", "address", "birth date", "personal interest" in the user's attribution table as shown in Fig. 4. The user inputs such user's attribution items through a user terminal thereof previously.

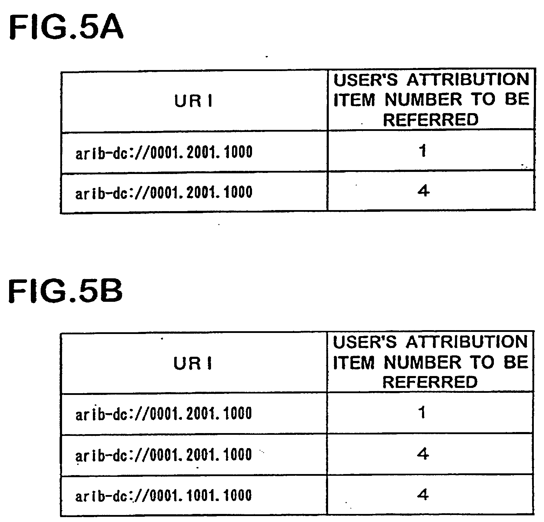

Fig. 5A shows a history information table. Both URI(s) (Uniform Resources Identifiers) that represent information to specify sender of information, and user's attribution item numbers are stored in the history information table. Such history information will be described later in detail.

Fig, 6 show a table for permitted URI. The permitted URI table is a table for determining whether or not use of a user's attribution item is permitted to a data-distributor specified by a URI in the table when a script for reading out a user's attribution item exists in received data.

Contents received by the process described later may be stored in the hard disk 46 forming storage part.

A set-top-box is shown as the receiving device in this embodiment, the receiving device may also include a monitor (TV set).

Alternatively, the user's attribution table, the history information table and the permitted URI table may be stored in a non-volatile memory (not shown) provided within the receiving device.

### (4) Hardware structure of billing server

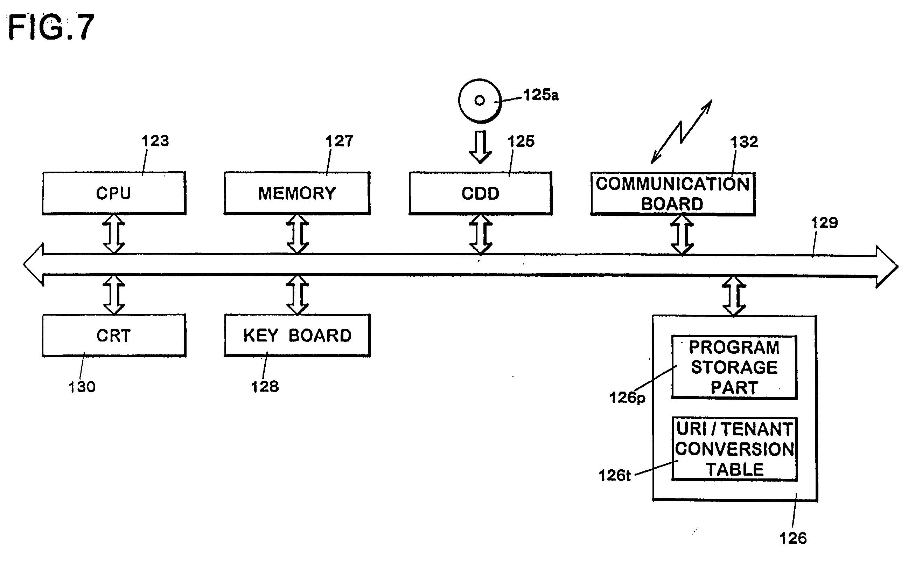

As shown in Fig. 7, the billing server 11 comprises a CPU 123 a memory 127, a hard disk 126 a CRT 130, CDD (CD-ROM drive) 125, a keyboard 128, a communication board 132 and a bus line 129. The CPU 123 controls other parts via the bus line 29 according to the programs stored in the hard disk 126.

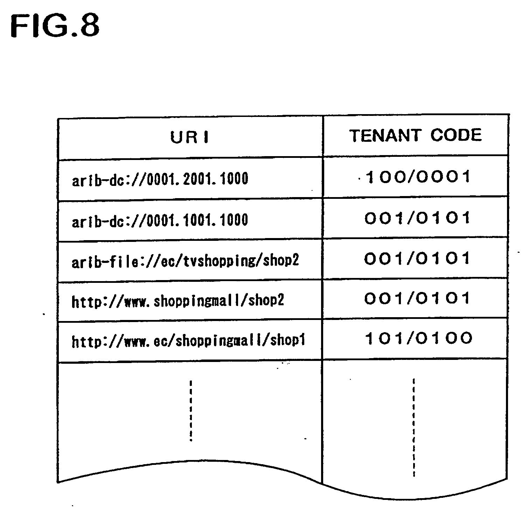

A program 126a for billing that is described later and a URI/tenant conversion table 126t depicted in Fig. 8 are stored in the hard disk 126. As shown in Fig. 8, correspondences among URI(s) and tenant codes are stored in the URI/tenant conversion table. The details of processing with that table will be described later.

### (5) Storing process of history using user's attribution items

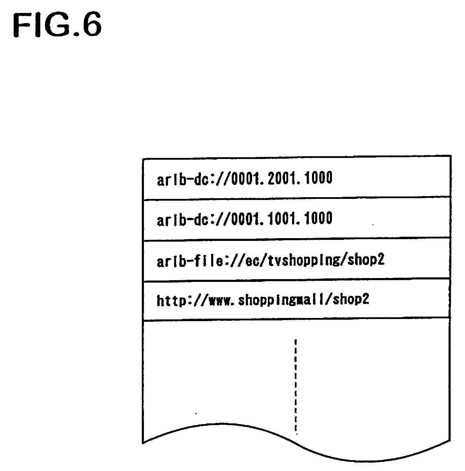

Storing process of history for billing that uses user's attribution, conducted upon receipt of contents-data from a data-distributor stored in the permitted URI table shown in Fig. 6 will be described hereunder. Description will be made under the assumption that contents-data distributed by a data-distributor from the information-distributing device 15 is transmitted as original-network_id "0001", transport_id "1001", service_id "1000", event_id "1100", and component_id "40".

The user of the user terminal 1 inputs through a remote-controller (not shown) a channel selection command in order to receive a desired service. In response to the input, the CPU 44 sets conditions for selecting a channel into the tuner 32 and the transport decoder 34 depicted in Fig. 3. The RAM 42 sequentially stores BML data thus received.

A browsing program depicted in Fig. 9 is stored in the hard disk 46, interpretation of data and display thereof is performed in accordance with such browsing program. The details of such process will be described hereunder.

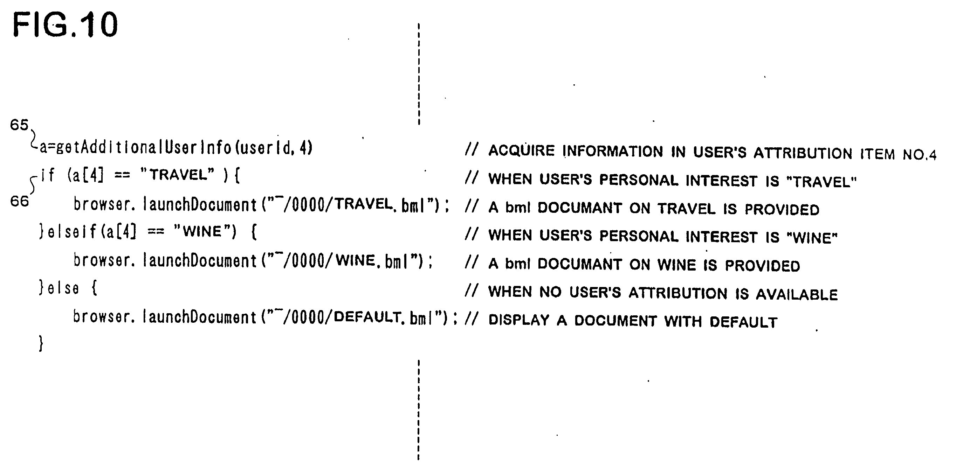

The CPU 44 judges whether or not BML data is received (step S1, Fig. 9) and upon receipt of data it further judges whether a line thus received is a script or not (step S3, Fig. 9). For example, when the BML data depicted in Fig. 10 is received, process according to a script is carried out because the description "a=getAdditionalUserInfo(userId, 4) is judged as a script (step S5, Fig. 9). This script is a script for acquiring user's attributions in user's attribution item number 4. In response to the script, the CPU 44 carries out process for acquiring user's attribution written in the user's attribution item number 4.

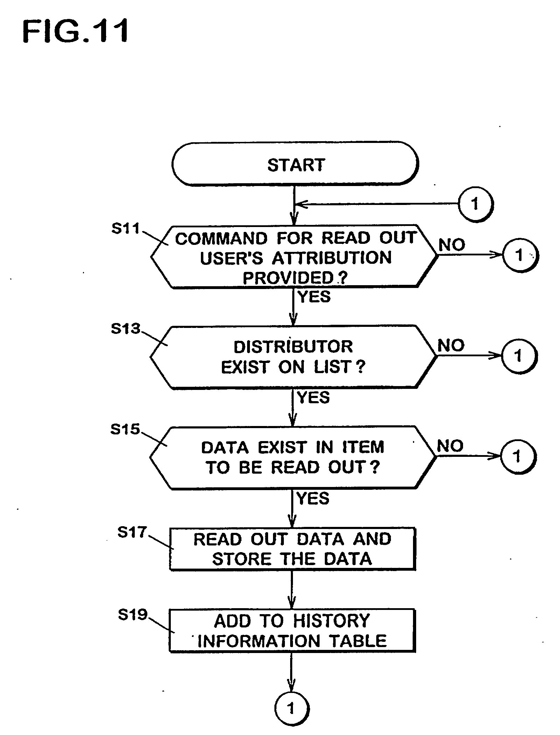

Meanwhile, the browsing program has a program for acquiring user's attribution depicted in Fig. 11, process for acquiring user's attribution is carried out according to the acquiring program.

The CPU 44 judges whether or not a command for reading out user's attribution is provided according to the acquiring program (step S11, Fig. 11), and further judges whether or not the distributor of the contents-data exists on a list in a permitted URI table when the read out command is provided (step S13, Fig.11). In this case, the contents-data is transmitted as original-network_id "0001", transport_id "1001", service_id "1000", event_id "1100, and a distributor's URI "arib-dc://0001.1001.1000.1100" exist in the list shown in Fig. 6. Since the distributor is on the list, the CPU 44 judges whether or not data exists in an item to be read out (step S15, Fig. 11). As shown in Fig. 4, data "travel" is in user's attribution item number 4 for which a command for acquiring is carried out, the data is read out therefrom and store it in a memory region (step S 17, Fig.11). The CPU 44 adds to the history data table a fact that the user's attribution item number 4 is read out for the distributor's URI "arib-dc://0001.1001.1000.1100" (step S19, Fig. 11). In this way, both the user's attribution item number 4 and its URI are added to the history information table as shown in Fig. 5B. This finalizes the processes according the script.

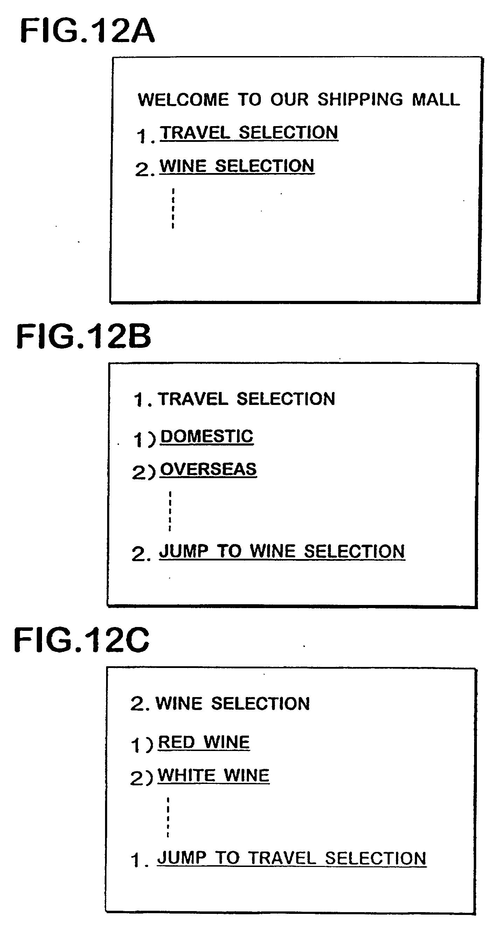

Next, the CPU 44 judges whether or not the BML data is the last line (steep S9, Fig. 9). A referenced line is shifted one line below because the line is not the final in this case (step S10, Fig. 9), and the CPU again judges whether or not the new referenced line is a script (step S3, Fig. 9). Process according to a script is carried out because the line 66 is a script. This script is a script by which each of a file "/0000/travel.bml"and a file "/0000/wine.bml and a file "/0000/default.bml" is displayed respectively when data in the user's attribution 4 is respectively "travel selection", "wine selection" and any other data. The CPU 44 reads out from the memory data in the user's attribution item number 4 which has been stored therein in order to make the above mentioned judgement. In this case, a file "/0000/travel.bml" existing on the same relative path is determined as an object to be displayed because the data thus read out agree with a condition (a[4]=="travel") out of the scripts shown in Fig. 10. In this way, the display shown in Fig.12B is displayed on the monitor. As described above, display corresponding to user's attribution can be displayed on the monitor by switching the display using descriptions of the user's attribution items. The record of use for the user's attribution can be stored as history together with information on data-distributor.

Process subsequent to step S9 in Fig. 9 is carried out repeatedly. In the process, the CPU 44 judges whether or not BML data is received (step S1, Fig. 9), and outputs basic data for display according to the BML data (step S7, Fig. 9).

When no information on distributor of the contents-data exists on a list of a permitted URI table at step S15 in Fig. 11, process for acquiring user's attribution is finalized without carrying out step S17 and step S19 in Fig. 11. Similar process is carried out when nothing is stored on the user's attribution item number [4]. In these cases, no process for acquiring user's attribution is carried out. As a consequence, a file "arib-dc://0001.1001.1000.1100.40/0000/defualt.bml" is determined as an object to be displayed according to a line 66 depicted in Fig. 10, so that display shown in Fig. 12A is displayed on the monitor.

The description is directed to the display when data "wine selection" is displayed on the user's attribution item number [4] in the user's attribution table. Both items and URI(s) are added to the history information table thus read out according to the program. In this case, a file displayed by the browsing program is switched to "/0000/wine.bml" according to the line 66 depicted in Fig. 10 because the data in user's attribution item number [4] which has been read out agrees with a condition "a[4]=="wine". In this way, the display shown in Fig.12C is displayed on the monitor. Consequently, display can be switched with reference to the descriptions in the user's attribution items.

### (6) Billing process using history data

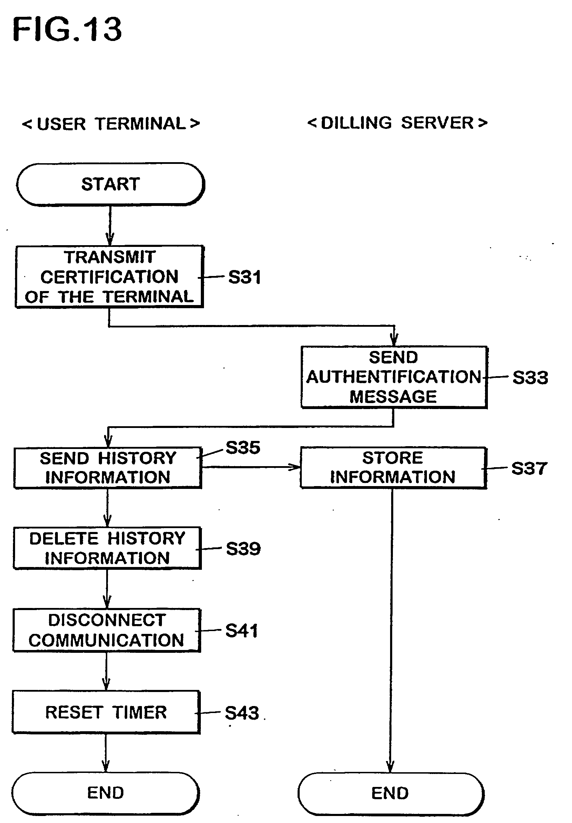

The user terminal carries out process for transmitting history information according to a preset timer condition. Detail of such process is described with Fig. 13.

Once the preset timer condition is satisfied, the CPU 44 of the user terminal transmits a certification of that terminal to a billing server 11 after establishing communications between the billing server (step S31, Fig. 13). On receipt of the certification, a CPU 144 of the billing server 11 sends an authentication message to the user terminal (step S33, Fig. 13). The user terminal sends history information (step S35, Fig. 13). In above case, history information depicted in Fig. 5B is transmitted. The billing server 11 stores the information (step S37, Fig. 13). The user terminal deletes the history information after sending such information (step S39, Fig. 13). Thereafter, the CPU 144 disconnects the communication to the billing server (step S41, Fig. 13), and resets the timer (step S43, Fig. 13). By carrying out such process for each of the user terminals, the record of use for the user's attribution at a plurality of user terminals is stored in the billing server 11 for every URI.

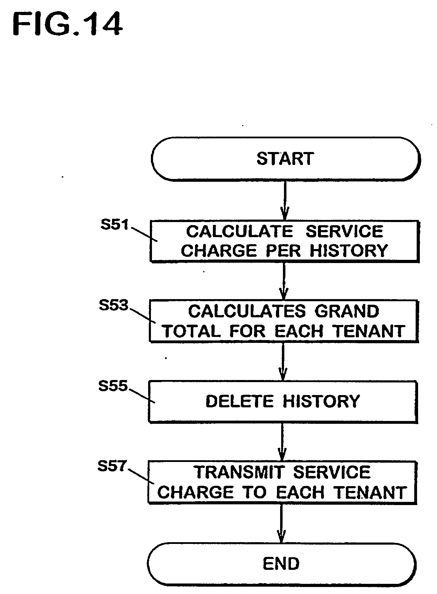

The CPU 114 of the billing server 11 calculates service charge per history (step S51, Fig. 14). Unit charge may be set at ¥1 per use for the information on attribution item number 1, ¥2 per use for the information on attribution the item number 2, and ¥0.1 per use for the information on attribution the item number 3 and so on, for example. Such unit charge may be varied for each distributor.

The CPU 144 of the billing server calculates a grand total for each tenant (step S53, Fig. 14). The amount can be calculated by calculating a total sum of service charges that are billed on the same tenant. For example, because URI "arib-dc://0001.1001.1000.1100" is an URI for the data-distributor of a tenant code 001/0101, history information of the URI may be sum up in order to calculated the total sum of service charges for the URI. The reason why the data-distributor of a tenant code 001/0101 is on another URI in the table shown in Fig. 8 is that the contents distributed through that URI could be distributed via the Internet or distributed in a storage method.

Next, the CPU 144 charges service charges to each tenant (step S57, Fig.14). The amount to be charged may be notified via an e-mail or transmitted via facsimile, for example.

In this way, billing corresponding to the record of use for user's attribution can be carried out.

### (7) Embodiment using a storage method, or the Internet

While contents are distributed in a real-time basis via BS digital broadcasting in the above-described embodiment, the principle of the present invention may also apply to each of the cases such that contents are stored in a hard disk of a user terminal before distribution, or that contents are distributed via the Internet.

The storage method is a method in which contents-data transmitted from the broadcasting station is stored at a user terminal in prior to display thereof, and then the stored data are read out in an appropriate manner and are displayed. The communication method used for such method is recommended to use virtual shopping mall through which goods and services are supplied because a large amount of data can be transferred even in use of carousel transmission for transferring data. In concrete terms, files in a directory tree shown in Fig. 10 are sent previously and a receiving device stores the data in its hard disk.

Conventional BML data is used for this embodiment in which URI having BML data at a destination to be linked is described. In the storage method, a storage device designated by a BML file is the hard disk 46, that is, a local disk unlike the broadcasting in BS. In the BS putting an absolute path after "arib-file://" designates digital broadcasting standard currently available, it is possible to specify which of a storage file. The whole file is written as "arib-file://ec/tvshopping/shop2.bml", for example.

In the case of acquiring contents-data from a data-distributing-server connected to the Internet, the URI used for acquiring can be written as "http://www.panasonictvshop.co.jp/..." Of course, the source for acquiring the contents-data can be switched by making destinations to be linked for each of the changes such as broadcasting to the storage method, the storage method to the Internet distribution in a desired manner.

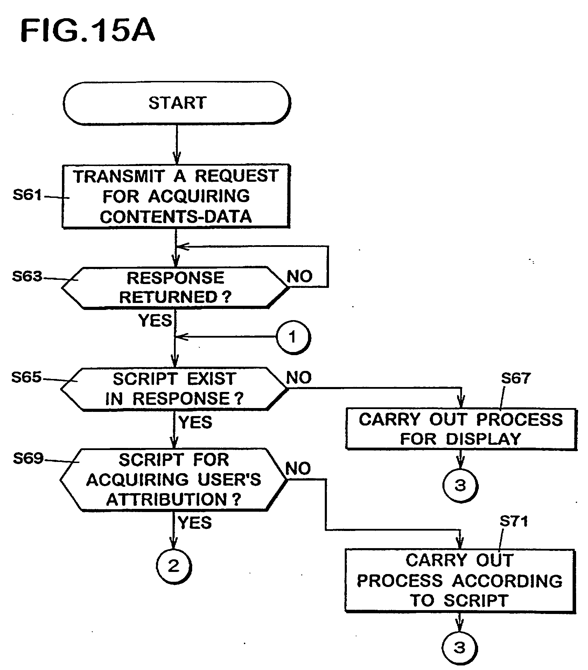

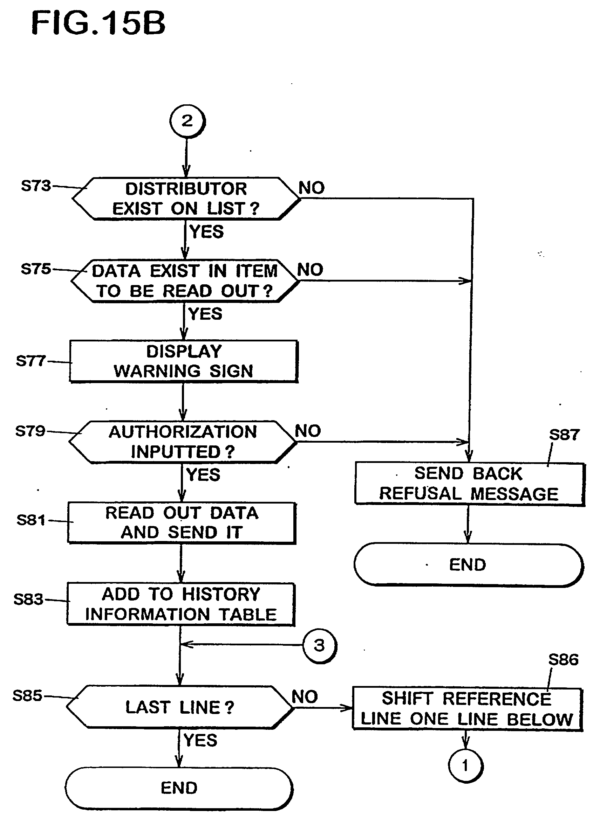

Similar to the above, in the case of distributing contents-data via the Internet, scripts defining a plurality of conditional transfers may be put into HTML data. However, since distribution of the contents-data via the Internet has a complete interactivity, the contents-data can be send by a data-distributing-server using user's attribution data which has been send back to the data-distributing-server once. In this case, there is a probability to leak personal information unintentionally because user's attribution data is outputted outside of the user terminal. In order to avoid such problem, the user's attribution data may be sent back to the data-distributing-server when a notification of sending the user's personal information to the outside is given to the user and when the user endorses the output. In such a case, a program performing the process shown in Figs. 15A and 15B is to be stored as a browsing program.

In the program, the CPU 44 transmits a request for acquiring contents-data to a desired data-distributing-server (step S61, Fig. 15A). Then, the CPU 44 judges whether or not the data-distributing-server return a response (step S63, Fig. 15A). When a response is received, the CPU 44 judges whether or not any scripts exist in the response (step S65, Fig. 15A). When the line reading in is not a script, the CPU 44 carries out process for display (step S67, Fig. 15A). When the CPU judges the line as a script, it further judges whether the script is a script for acquiring user's attribution (step S69, Fig. 15A). The CPU 44 carries out process according to the script when the script is not an acquiring script (step S71, Fig. 15A).

In the contrast, when the script is an acquiring script, the CPU 44 judges whether or not the distributor of the contents-data exists on a list in a permitted URI table (step S73, Fig. 15B). The CPU 44 judges whether or not data exists in an item to be read out when the distributor exists on the list shown in Fig. 6 (step S75, Fig. 15B).

When a judgement that data exists in an item to be read out is made by the CPU 44, it outputs image data for displaying a warning sign "we receive a request for transmitting your personal information such as interest in travel listed on the user's attribution item number [4]. Do you agree this transmission?", for example (step S77, Fig. 15B). The user looks at the warning display and gives permission for the transmission when they agree. The CPU 44 watches input of authorization (step S79, Fig. 15B), and it reads out the data in the user's attribution item when the input is made (step S81, Fig. 15B), and then add the history information table (step S83, Fig. 15B). Thereafter, the CPU 44 judges whether or not the line is the last line (step S85, Fig. 15B). A referenced line is shifted one line below (step S86, Fig. 15B) and process subsequent to step S65 in Fig. 15 is carried out repeatedly. When the line is judged as the last line, the CPU ends its process.

Thus, both the user's attribution and URI used for transmission are added to the history information table as described above. The data-distributing-server, which receives such user's attribution, may send contents-data according to the attribution.

The record of use for user's attribution can be stored as a history even when a case such that user's attribution data is send to the sender thereof such as the Internet distribution.

In each of the cases, when no distributor of the contents-data exists is on the list in step S73, no data exists in the item to be read out in step S75, and no authorization is provided in step S79, a message indicating refusal of such process is sent back (step S87, Fig. 15B). In this way, it is possible to avoid leak of personal information to the outside of the user terminal without authorization.

For the users, there is no way of recognizing which of distribution is currently carried out especially when distribution is carried out through broadcasting, storage method and the Internet. The present invention can avoid leak of personal information to the outside of the user terminal without authorization even when the distribution is carried out through the Internet before the user knew it.

### (8) Alteration

Billing corresponding to the record of use for user's attribution can be carried out because when data is stored in a designated user's attribution item, it is record as a history in the above embodiment. This embodiment is not limited to that way, when a command for reading out a user's attribution items is provided, the recording as a history can be carried out even when no data exists in that user's attribution item.

There is a case that display in default setting is displayed eventually, even when data is stored in a designated user's attribution item. For example, a script for displaying "0000/golf-goods.bml" is included in received BML data when personal interest of a user is "golf', and data is read out from a user's attribution item when personal interest of the user is recorded as "music appreciation" at the user terminal. This case, however, gives the same result such that nothing is recorded in the attribution item. In order to solve such a problem, a plurality of candidates which can be recorded in the user's attribution item "personal interest" are prepared and selection of personal interest out of these candidates can be carried out.

In the above embodiment, the description is made under an assumption of using online shopping, the present invention can apply to other contents distribution purposes when switching of display image using user's attribution data is preferred for such an application.

Display image is switched using data, which has been recorded in a user's attribution item in the above embodiment, the display image data can be generated according to the data.

In the above embodiment, a network_id, a transport stream_id, and a service_id are used as information to specify the sender of information in distribution with broadcasting, and URI(s) are used as the sender specifying information in distribution with a storage method and with the Internet. Any information (such as IP address and so on when contents distribution server are used, for example) which can specify the sender may be used.

Further, the data stored in the permitted URI table may be changed using a billing server. Sending broadcasting data including a script(s) to be changed may also change the permitted URI table.

A set-top-box for receiving BS satellite broadcasting is used as an example in the above embodiment, the set-top-box may be used for receiving CS satellite broadcasting, the set-top-box may also be used to receive digital terrestrial broadcasting.

The user terminal used in the above embodiment may not be a dedicated device, the terminal can be a PC (including notebook computer), PDA (personal digital assistance), or a cellular telephone with browsing function. If no hard disk is equipped in the user terminal, user's attribution data and history information may be stored in a nonvolatile memory such as flash-memory.

In this embodiment, software, which uses a CPU realizes the function shown in Fig.1. A part of or the whole the function may be realized by hardware such as logic circuits.

A part of the programs executed in the above description may be performed by the operating system (OS).

### 2. A second embodiment

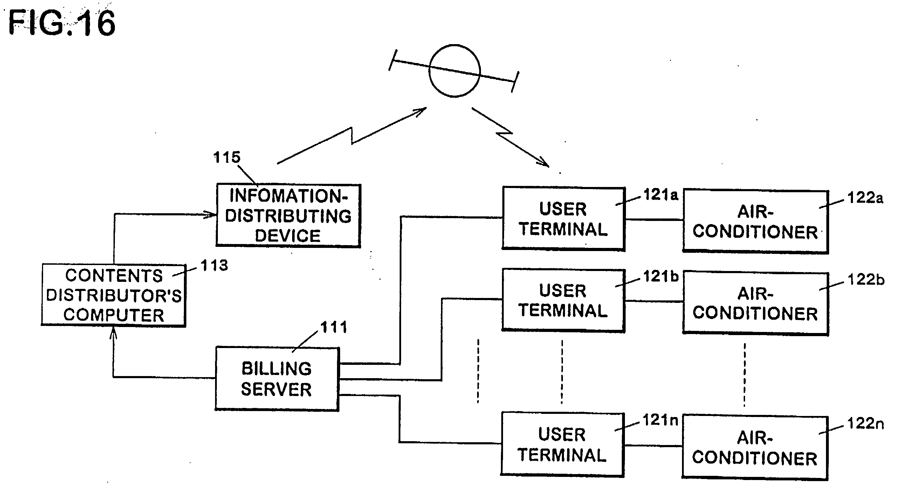

Basic display data outputted to the monitor is switched in the above embodiment, instead of that, external device can be controlled by the principle of the present invention. For example, variety of control for air-conditioners, depending upon areas where users reside, can be carried out according to weather forecast. This control will be described using Fig. 16.

A computer 113 at a data-distributor supplies today's weather forecast as contents-data to an information-distributing device 115. Such contents-data includes a script for reading out a user's attribution item number [2] and another script for carrying out process such that "turn on the air-conditioner when the anticipated high temperature is above 28°C ".

The information-distributing device 115 broadcasts such contents-data via a satellite. User terminals 121a, 121b...121n receives such contents-data. Each of the user terminals 121a, 121b...121n judge whether or not a script for reading out user's attribution is included in the contents-data. In this case, each terminal judges whether or not a permission to use user's attribution is provided to the distributor with reference to the permitted URI table because the script for reading out does exist in the contents-data. In this case, when a permission to use user's attribution is provided to the distributor, "address" is read out from the user attribution table. Subsequently, the script for carrying out process such that "turn on the air-conditioner when the anticipated high temperature is above 28°C" is performed. When an area where user of the user terminal 121a satisfies such temperature condition, a signal for turning on the air-conditioner 122a is generated and outputted. Similar control process is carried out to other user terminals 121b, ...121n.

Furthermore, each of the user terminals 121a, 121b...121n stores data on the user attribution item number [2] together with ID for specifying the distributor in the history information table. This history data is transmitted to a billing server 111. The billing server stores such history data. The billing server 111 calculates service charges for use of the user's attribution for the distributor's computer 113 by using history data transmitted from a plurality of user terminals and send the calculated charges to the computer 113.

Hence, external device(s) can be controlled in response to own user's attribution data by just broadcasting one contents-data.

Such external device to be controlled needless to say includes home-appliances such as a microwave oven, a laundry machine, but includes production facilities of a plant.

### 3. A third embodiment

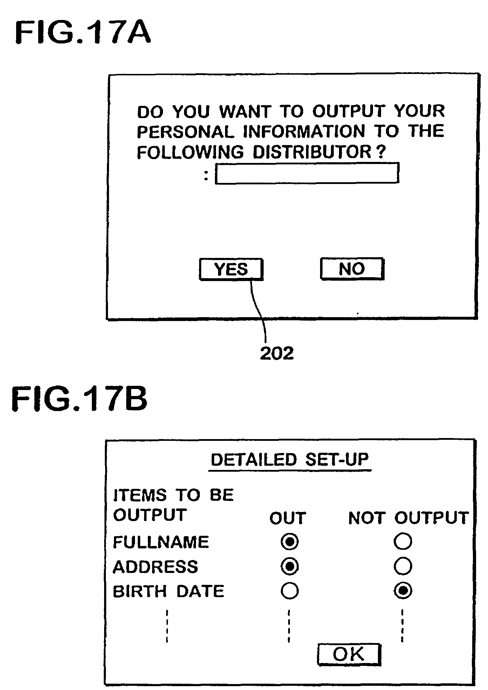

While the permitted URI table has been created for each of information distributors in the embodiment described above, users may create the table in the following manner. For example, a display image depicted in Fig. 17A is displayed when a command for switching the mode into a mode for set-up user attribution item. The display image prompts the user to input whether or not outputting information on the user in order to store the inputted data into the permitted URI table.

The display image for set-up depicted in Fig. 17A can be displayed any time, for example, the image can be displayed whenever a command for reading out user's information is provided.

When a button 202 on the display image depicted in Fig. 17A is clicked, a detailed set-up image, through which authorization of output for each of user's attribution items is set, can be displayed. The detailed set-up image can be displayed any time similar to the display shown in Fig. 17A. For example, the detailed set-up image can be displayed whenever a command for switching the mode into a mode for detailed set-up of user's attribution items is provided by the user. In this way, user can amend user's attribution items whenever they desire to do so.

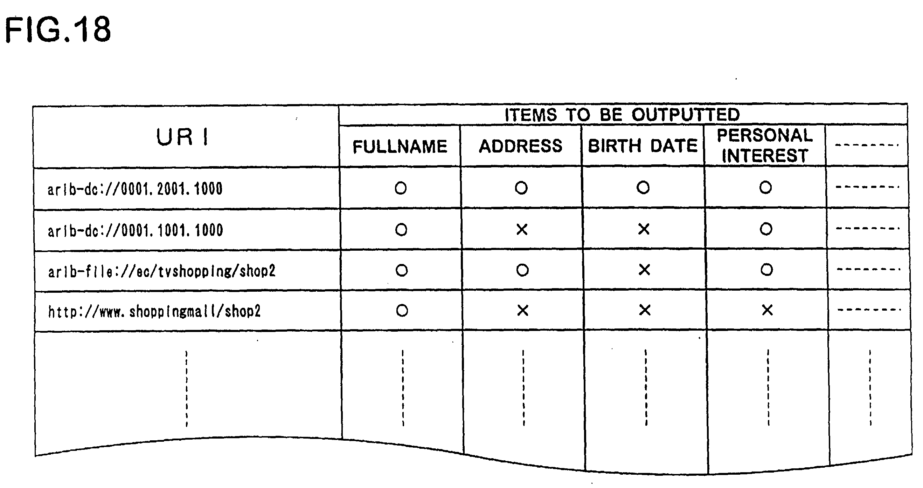

Fig. 18 shows an example of a permitted URI table, which has been set-up in detail. As shown in the table, each user's attribution item accompanies its authorization of output or not.

Furthermore, credit rating of privacy policy for each information distributor may be defined and user's attribution items which can be outputted according to the privacy policy

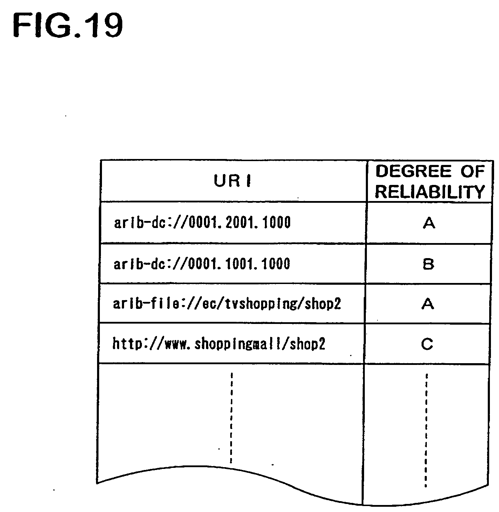

Degree of reliability for privacy policy may be provided to each of the information distributors as shown in Fig. 19. Beside the degree, the user's attribution items to be outputted corresponding to the reliability may also be determined, and user's attribution item(s) may be outputted in accordance with the determined degree.

In addition to determining the degree of reliability and performing output user's attribution according to thereof, degree of the reliability for the data-distributing-servers (i.e. information distributors) may be disclosed to user(s). In response to the disclosed degree, the user(s) can amend the permitted URI table.

Furthermore, the information distribution device may previously determine the degree of reliability for the information distributors. In order to store such degree of reliability for the information distributors in the user terminals, the degree may be included into transmission data for example, or transmitted from the billing server 11 via the communication part 7 (see Fig. 1). The degree may also be stored in a data-distributing-server of an information distributor and transmitted from the data-distributing-server to a user terminal.

The permitted URI tables depicted in Figs. 6, 18 may be generated automatically in accordance with the degree of reliability for the information distributors.

### 4. Other embodiments

Data on user's attribution is outputted to a program for processing stored in a user terminal in the above-described embodiments; the data may be passed to a designated processor in the user terminal.

In the above-described embodiment, the program for processing data on user's attribution items is written as a script(s) in contents-data, such processing program may previously be stored in the user terminal.

Image data for display is generated as data to be recognized by users in the above-described embodiment, data for making sound may also be generated therefor instead of image data. For example, filed of background music (BGM) via satellite broadcasting can be switched to a certain field(s) according to user's preferences.

In the above described embodiments, information on user is sent to the data-distributing-server in the case of outputting the user's information to the outside of the user terminal, the user's information may be sent to a device to be controlled in order to carry out process for controlling the device with the user's data provided to the device. Any data processing device, other than the device to be controlled, can either user's attribution data or data for processing according to user's attribution data.

Read out of user's attribution data is set in an all or nothing basis in the above-described embodiments (i.e. either of reading out the all of items or can not reading out any items), the data can be read out for each of the items. For example, it is possible to set for a certain data-distributing-server to read out only items "1" through "4" for a certain data-distributing-server, or to set for the content distributor to read out only the item "2".
1) In accordance with one aspect, the present invention provides a method of billing the use of information comprising the steps of: transmitting from an information distributing device data to be distributed including a command for reading out user's attribution; at a user terminal, outputting information on user's attribution being stored to a designated destination when the received data to be distributed includes the command for reading out the user's attribution information, and storing history of the output together with information for specifying a source of transmitting the data to be distributed as history of use; and at a billing server, billing for the use of information to the information transmission source specified by the information for specifying the source. Thus, billing according to the number of use of user's attribution can be carried out by storing history of output of the user attribution in association with the information for specifying its source of transmission, and carry out billing according to the frequency of use for the user's attribution at the billing server.
2) In accordance with another aspect, the present invention provides a billing method wherein the user terminal stores a processing program, and the designated destination is the processing program. In this way, data processing can be performed using information on user's attribution at the user terminal without any probability of leaking user's attribution to the outside. Consequently, at multiple user terminals, data processing according to information on user's attribution stored can be performed by just distributing one (1) data to be distributed.
3) In accordance with another aspect, the present invention provides a billing method wherein the processing program is transmitted so as to contained in the data to be distributed. In this way, data processing can be performed dynamically because the program is not limited to a program stored in the user terminal.
4) In accordance with another aspect, the present invention provides a billing method wherein the processing program is previously stored in the user terminal. In this way, data processing using the user's attribution can be carried out even when no such program is contained in the data to be distributed
5) In accordance with another aspect, the present invention provides a billing method wherein a device to be controlled connected to the user terminal is controlled with the user's attribution information. In this way, appropriate control in accordance with stored user's attribution can be carried out at multiple user terminals by just distributing one data to be distributed.
6) In accordance with another aspect, the present invention provides a billing method further comprises the step of outputting data to be recognized by a user using the user's attribution information. In this way, data to be recognized by a user in accordance with stored user's attribution can be outputted at multiple user terminals by just distributing one data to be distributed
7) In accordance with another aspect, the present invention provides a billing method wherein the data to be recognized is image data. In this way, image data to be displayed in accordance with stored user's attribution can be outputted at multiple user terminals by just distributing one data to be distributed
8) In accordance with another aspect, the present invention provides a billing method wherein the data to be recognized is audio data. In this way, audio data in accordance with stored user's attribution can be outputted at multiple user terminals by just distributing one data to be distributed
9) In accordance with another aspect, the present invention provides a billing method further comprises the step of outputting the user's attribution information to outside of the user terminal. In this way, user's attribution information can be provided to the outside of the user terminal.
10) In accordance with another aspect, the present invention provides a billing method wherein a destination for the output of the user's attribution information is the information-distributing device. In this way, new data to be distributed can be distributed in accordance with user's attribution information received at the information-distributing device.
11) In accordance with another aspect, the present invention provides a billing method wherein a destination for the output of the user's attribution information is a device to be controlled connected to the user terminal. In this way, a device to be controlled can independently be controlled in accordance with the user's attribution information
12) In accordance with another aspect, the present invention provides a billing method further comprises the step of preparing a permission table for determining whether or not outputting the user's attribution information. In this way, the user's attribution information is outputted to a designated a destination in the permission table.
13) In accordance with another aspect, the present invention provides a billing method wherein the permission table can be amended by a user. In this way, the user can determine whether or not to output the user's attribution information.
14) In accordance with another aspect, the present invention provides a billing method further comprises the step of providing degree of reliability for the information distributor to the user. In this way, the user can amend the table according to the degree of reliability.
15) In accordance with another aspect, the present invention provides a billing method wherein the degree of reliability is previously determined by the information distributor. In this way, the table can be amended in a spirit of judgement made by the respective information distributors.
16) In accordance with another aspect, the present invention provides a billing method wherein the permission table can be set whether or not outputting the user's attribution information for each user's attribution item. In this way, user's attribution items to be output can be set in details.
17) In accordance with another aspect, the present invention provides a billing method wherein the permission table is automatically generated in accordance with degree of reliability for each information distributor. In this way, a determination whether or not to output the user's attribution information can be made in accordance with the reliability.
18) In accordance with another aspect, the present invention provides a billing method wherein the permission table is set so that whether or not outputting the user's attribution information for each user's attribution item. In this way, user's attribution items to be output can be set in details.
19) In accordance with another aspect, the present invention provides a billing method further comprises the steps of at the user terminal, making an inquiry to the user whenever user's attribution information is about to output, and outputting the user's attribution information when a permission to the inquiry is received. In this way, no information is output without authorization of the user, and as a consequence, the user can take control of data processing using user's attribution information.
20) In accordance with another aspect, the present invention provides a billing method further comprises the steps of at the user terminal, storing a permission list for determining whether or not outputting the user's attribution information, judging whether or not at an information distributing device distributing a command for reading out the user's attribution information exists on the permission list, and outputting the user's attribution information when the user's attribution information exists in the list. In this way, billing can be carried out for sure when name of the distributing device exists on the permission list by listing only the distributors who intend to pay for the billing on the permission list.
21) In accordance with another aspect, the present invention provides a billing method wherein the permission list can be set whether or not permitting the output of the user's attribution information for each character item. In this way, a determination whether or not to output for each character item.
22), 31) In accordance with another aspect, the present invention provides a user terminal and a method of receiving, the user terminal outputs information on user's attribution being stored to a designated destination when data to be distributed including a command for reading out the user's attribution information is received from an information distributing device, and history of the output is stored together with information for specifying a source of transmitting the data to be distributed as history of use, and the history of use is outputted to a billing server. Thus, billing according to the number of use of user's attribution can be carried out by storing history of output of the user attribution in association with the information for specifying its source of transmission, and carry out billing according to the history at the billing server.
23) In accordance with another aspect, the present invention provides a user terminal managing billing of own use of information, wherein the user terminal outputs information on user's attribution being stored to a designated destination when data to be distributed including a command for reading out the user's attribution information is received from an information distributing device, and wherein history of the output is stored together with information for specifying a source of transmitting the data to be distributed as history of use. Thus, billing can be carried out by storing history of output of the user attribution in association with the information for specifying its source of transmission, and carry out billing in accordance with the history at the billing server. In this way, billing according to the number of use of user's attribution can be carried out.
24) In accordance with another aspect, the present invention provides a user terminal managing billing of own use of information, wherein an inquiry is made to the user whenever user's attribution information is about to output, and wherein the user's attribution information is outputted when a permission to the inquiry is received. In this way, no information is output without authorization of the user, and as a consequence, the user can take control of data processing using user's attribution information.
25) In accordance with another aspect, the present invention provides a user terminal managing billing of own use of information, wherein the user terminal, stores a permission list for determining whether or not outputting the user's attribution information and judges whether or not at an information distributing device distributing a command for reading out the user's attribution information exists on the permission list, and outputs the user's attribution information when the user's attribution information exists in the list. In this way, billing can be carried out for sure when name of the distributing device exists on the permission list by listing only the distributors who intend to pay for the billing on the permission list.
26) In accordance with another aspect, the present invention provides a user terminal managing billing of own use of information, wherein the user terminal is a set-top-box, the information-distributing device is a broadcasting station, and wherein the data to be distributed is described in a data format in a language for describing contents used in data telecast. In this way, billing as to data to be distributed written in a format of a contents-description language used in data telecast can be carried out.
28) In accordance with another aspect, the present invention provides a user terminal managing billing of own use of information, wherein the user terminal carries out the following process; 1) data for displaying display images is outputted using the user's attribution information when a program for switching display image is contained in the data to be distributed, and 2) the user's attribution information is outputted to the data-distributing-server when a command for outputting the user's attribution information to a data-distributing-server connected via a communication line is contained in the data to be distributed. In this way, billing in accordance with the record of use for the user's attribution can be carried out even when data to be distributed is distributed in both broadcasting and the Internet.
29, 30) In accordance with another aspect, the present invention provides a billing server and a method of billing, wherein the server reading out history of use for the information on user's attribution from each of user terminals, the history of use being a record of outputting the user's attribution to a designated destination according to a command for reading out user's attribution contained in data to be distributed supplied from the data-distributor, and
   the server carrying out billing onto a data-distributor specified by information for specifying a source of transmitting the data to be distributed, the information for specifying the transmission source being in association with the history of use..
32) In accordance with another aspect, the present invention provides a method of receiving data to be distributed comprises the steps of outputting information on user's attribution being stored to a designated destination when data to be distributed including a command for reading out the user's attribution information; and storing history of the output together with information for specifying a source of transmitting the data to be distributed as history of use. In this way, billing in accordance with such history can be carried out at the billing server.
35) In accordance with another aspect, the present invention provides a method of billing the use of information comprises the steps of reading out user's attribution information when a command for reading out user's attribution is received from a source of distributing the command; storing history of the reading out together with information for specifying a source of transmitting the data to be distributed as history of use for user's attribution information; and billing onto the source of distribution specified by the information on source of transmission. In this way, billing in accordance with such history can be carried out at the billing server.

While the embodiments of the present invention, as disclosed herein, constitute preferred forms, it is to be understood that each term was used as illustrative and not restrictive, and can be changed within the scope of the claims without departing from the scope and spirit of the invention.

## Claims

1. A method of billing the use of information comprising the steps of:
A) transmitting from an information distributing device data to be distributed including a command for reading out user's attribution;
B) at a user terminal, outputting information on user's attribution being stored to a designated destination when the received data to be distributed includes the command for reading out the user's attribution information, and storing history of the output together with information for specifying a source of transmitting the data to be distributed as history of use; and
C) at a billing server, billing for the use of information to the information transmission source specified by the information for specifying the source.

2. A billing method of claim 1, wherein the user terminal stores a processing program, and wherein the designated destination is the processing program.

3. A billing method of claim 2, wherein the processing program is transmitted so as to contained in the data to be distributed.

4. A billing method of claim 2, wherein the processing program is previously stored in the user terminal.

5. A billing method of claim 2, wherein a device to be controlled connected to the user terminal is controlled with the user's attribution information.

6. A billing method of claim 2, further comprising the step of: outputting data to be recognized by a user using the user's attribution information.

7. A billing method of claim 6, wherein the data to be recognized is image data.

8. A billing method of claim 6, wherein the data to be recognized is audio data.

9. A billing method of claim 1, further comprising the step of: outputting the user's attribution information to outside of the user terminal.

10. A billing method of claim 9, wherein a destination for the output of the user's attribution information is the information distributing device.

11. A billing method of claim 9, wherein a destination for the output of the user's attribution information is a device to be controlled connected to the user terminal

12. A billing method of claim 1, further comprising the step of: preparing a permission table for determining whether or not outputting the user's attribution information.

13. A billing method of claim 12, wherein the permission table can be amended by a user.

14. A billing method of claim 13, further comprising the step of: providing degree of reliability for the information distributor to the user.

15. A billing method of claim 14, wherein the degree of reliability is previously determined by the information distributor.

16. A billing method of claim 13, wherein the permission table can be set whether or not outputting the user's attribution information for each user's attribution item.

17. A billing method of claim 12, wherein the permission table is automatically generated in accordance with degree of reliability for each information distributor.

18. A billing method of claim 17, wherein the permission table is set so that whether or not outputting the user's attribution information for each user's attribution item.

19. A billing method of claim 1, further comprising the steps of: at the user terminal, making an inquiry to the user whenever user's attribution information is about to output, and outputting the user's attribution information when a permission to the inquiry is received.

20. A billing method of claim 1, further comprising the steps of: at the user terminal, storing a permission list for determining whether or not outputting the user's attribution information, judging whether or not at an information distributing device distributing a command for reading out the user's attribution information exists on the permission list, and outputting the user's attribution information when the user's attribution information exists in the list.

21. A billing method of claim 1, wherein the permission list can be set whether or not permitting the output of the user's attribution information for each character item.

22. In a user terminal managing billing of own use of information, wherein the user terminal outputs information on user's attribution being stored to a designated destination when data to be distributed including a command for reading out the user's attribution information is received from an information distributing device, and history of the output is stored together with information for specifying a source of transmitting the data to be distributed as history of use, and wherein the history of use is outputted to a billing server.

23. In a user terminal managing billing of own use of information, wherein the user terminal outputs information on user's attribution being stored to a designated destination when data to be distributed including a command for reading out the user's attribution information is received from an information distributing device, and wherein history of the output is stored together with information for specifying a source of transmitting the data to be distributed as history of use.

24. A user terminal of claim 22, wherein an inquiry is made to the user whenever user's attribution information is output to outside of the terminal, and wherein the user's attribution information is outputted when a permission to the inquiry is received.

25. A user terminal of claim 22, wherein the user terminal, stores a permission list for determining whether or not outputting the user's attribution information and judges whether or not at an information distributing device distributing a command for reading out the user's attribution information exists on the permission list, and outputs the user's attribution information when the user's attribution information exists in the list.

26. A user terminal of claim 22, wherein the user terminal is a set-top-box, the information-distributing device is a broadcasting station, and wherein the data to be distributed is described in a data format in a language for describing contents used in data telecast.

27. A television set for satellite broadcasting which comprises the user terminal defined in claim 22.

28. A user terminal of claim 22, wherein the user terminal carries out the following process;
1) data for displaying display images is outputted using the user's attribution information when a program for switching display image is contained in the data to be distributed, and
2) the user's attribution information is outputted to the data-distributing-server when a command for outputting the user's attribution information to a data-distributing-server connected via a communication line is contained in the data to be distributed.

29. A billing server for billing the use of information on user's attribution onto a data-distributor, wherein
the server reading out history of use for the information on user's attribution from each of user terminals, the history of use being a record of outputting the user's attribution to a designated destination according to a command for reading out user's attribution contained in data to be distributed supplied from the data-distributor, and
the server carrying out billing onto a data-distributor specified by information for specifying a source of transmitting the data to be distributed, the information for specifying the transmission source being in association with the history of use.

30. A method of billing the use of information on user's attribution onto a data-distributor comprising the steps of:
reading out history of use for the information on user's attribution from each of user terminals; wherein the history of use is a record of outputting the user's attribution to a designated destination according to a command for reading out user's attribution contained in data to be distributed supplied from the data-distributor, and
carrying out billing onto a data-distributor specified by information for specifying a source of transmitting the data to be. distributed; wherein the information for specifying the transmission source is in association with the history of use.

31. A method of receiving data to be distributed comprising the steps of: outputting information on user's attribution being stored to a designated destination when data to be distributed including a command for reading out the user's attribution information; storing history of the output together with information for specifying a source of transmitting the data to be distributed as history of use; and transmitting the history of use to a server carrying out billing.

32. A method of receiving data to be distributed comprising the steps of: outputting information on user's attribution being stored to a designated destination when data to be distributed including a command for reading out the user's attribution information; and storing history of the output together with information for specifying a source of transmitting the data to be distributed as history of use.

33. A computer-readable program for processing the method defined in claim 30 with a computer.

34. A storage medium storing the program defined in claim 33.

35. A method of billing the use of information comprising the steps of: reading out user's attribution information when a command for reading out user's attribution is received from a source of distributing the command; storing history of the reading out together with information for specifying a source of transmitting the data to be distributed as history of use for user's attribution information; and billing onto the source of distribution specified by the information on source of transmission.
